# EUROPEAN PATENT SPECIFICATION

(11) **EP 4 621 436 B1**
(45) Date of publication and mention of the grant of the patent: **04.11.2026**
(21) Application number: 24386036.8
(22) Date of filing: 20.03.2024
(51) Int. Cl.: G01S 7/03, G01S 7/35, G01S 7/292, G01S 13/931, G01S 13/32, G01S 13/34

(54) **SELF-INTERFERENCE CANCELLATION**
SELBSTINTERFERENZUNTERDRÜCKUNG
ANNULATION D'AUTOBROUILLAGE

(43) Date of publication of application: 24.09.2025
(73) Proprietor: NXP B.V., 5656 AG Eindhoven (NL)
(72) Inventor: Rosenmuller, Daan, 5656 AG Eindhoven (NL); Doris, Konstantinos, 5656 AG Eindhoven (NL); Janssen, Erwin Johannes Gerardus, 5656 AG Eindhoven (NL)
(74) Representative: Schwarzweller, Thomas

(56) References cited:
- EP-A1- 3 588 127
- EP-B1- 3 425 802
- EP-B1- 3 499 731
- US-A- 3 703 004
- US-A1- 2020 132 805

## Description

### Field

The disclosure relates to cancellation of self-interference in radar transceivers.

### Background

Radar systems may suffer from self-interference, which can manifest as a strong signal in the receiver resulting from direct detection at the receiver of a transmitted signal. This strong signal can limit the ability of the transceiver to detect targets due to analog imperfections such as amplifier nonlinearities, which can result in 'ghost' targets and increase the overall noise floor of the transceiver.

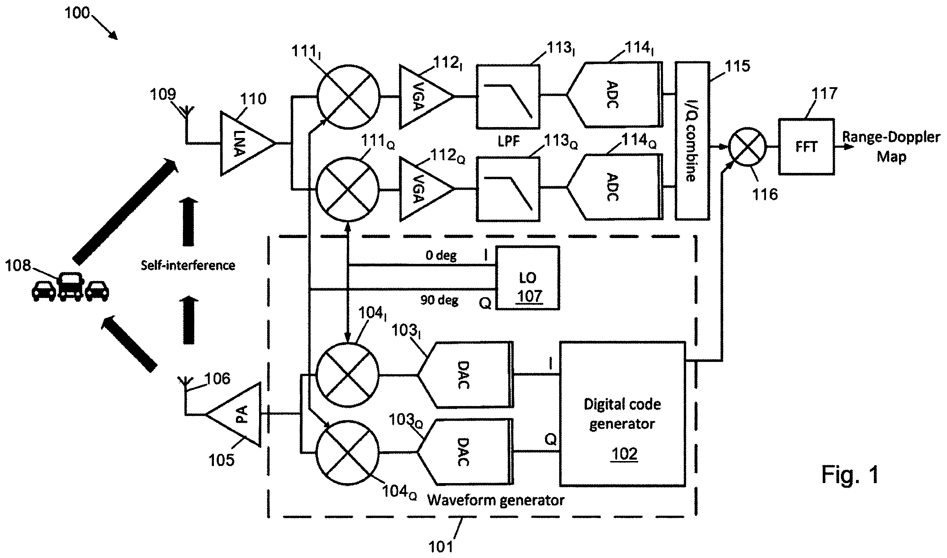

Figure 1 illustrates an example radar transceiver 100, showing a single transmitter-receiver pair. A practical implementation may comprise multiple such transmitter-receiver pairs. On a transmitter side of the transceiver 100, a waveform generator 101 generates in-phase (I) and quadrature (Q) baseband radar transmit waveform signals, converts the signals from digital to analog and upconverts the signals to be amplified by a power amplifier 105 for transmission via a transmit antenna 106. The I and Q digital signals are generated by a digital code generator 102 and provided to I and Q DACs 103_{I}, 103_{Q}. The resulting analog signals are upconverted by I and Q upconverters 104_{I}, 104_{Q}, which are provided with I and Q carrier signals by a Local Oscillator generator (LO) 107. The baseband transmitter signal may be coded in various ways, for example phase coded, OFDM (orthogonal frequency division multiplexed) or frequency modulated. The upconverters 104_{I}, 104_{Q} convert the baseband transmitter signals to a radar carrier frequency, which may for example be around 79 GHz in a typical vehicle radar application.

Reflections from one or more targets 108 are received by a receiver antenna 109. The received RF signal is amplified by a receiver RF amplifier 110 and converted back to baseband by I and Q down-converters 111_{I}, 111_{Q} using the same LO signals from the LO 107. After down-conversion to baseband, the received baseband signals are amplified by variable gain amplifiers (VGA) 112_{I}, 112_{Q} and filtered with low-pass filters (LPF) 113_{I}, 113_{Q} before being converted into the digital domain by analog to digital converters (ADC) 114_{I}, 114_{Q} and recombined by an I/Q combiner 115. Baseband amplification enables the dynamic range and resolution requirements of the ADCs 114_{I}, 114_{Q} to be relaxed.

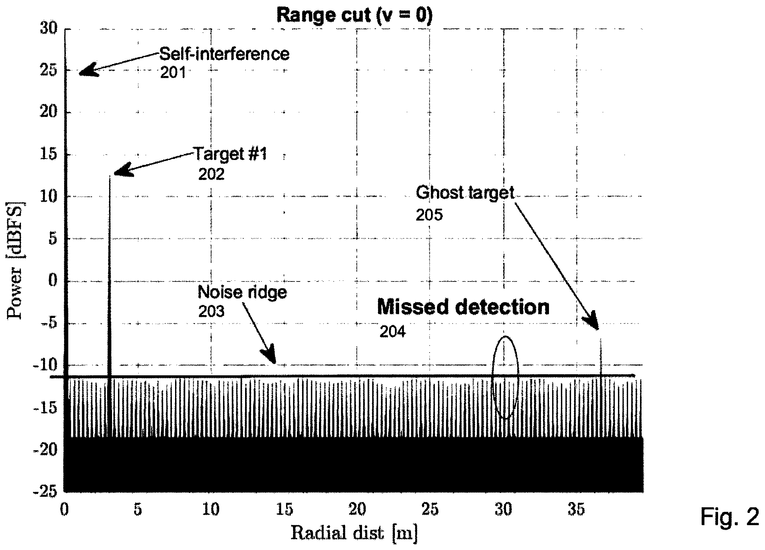

Target estimation is performed using the digital baseband signal output by the I/O combiner 115. A series of digital signal processing techniques may be used to obtain target distance, velocity and azimuth or elevation angle. Distance is typically obtained by applying a correlator filter for PMCW radar (for an FMCW radar there is a Fourier transform). The output of the correlator 116 is processed subsequently by a Doppler FFT module 117 that performs Doppler processing, which may be followed by MIMO and direction of arrival processing steps. The output of the receiver side is a range-Doppler map. An example extract from a range-Doppler map is illustrated in Figure 2, which plots power as a function of radial distance at a given relative velocity, which in this example is at zero velocity. The plot will vary with velocity and may be represented in a three dimensional plot with radial distance and velocity on the x and y axes and power on the z axis. Peaks in the plot indicate the distance and velocity of a target reflection.

For digitally coded radars such as PMCW or OFDM, self-interference forms a major limitation for receiver performance and leads to very stringent linearity, noise and dynamic range requirements for the receiver amplifiers and the ADC, which can be impractical to address in terms of power dissipation and silicon area. Linear broadband amplification specifically forms a major obstacle for digital coded radars. After down-conversion, the baseband bandwidth in digital radars in the 76-81GHz band can be typically up to 4GHz for short range radar use cases, while amplification of up to 40 dB or more may be required. To illustrate the challenge, a line up consisting of 5 dB LNA gain, -9 dB mixer gain, 30 dB baseband gain with an IIP3 of 13 dBm and an ADC resolution of 10 bit may be used to receive a polyphase digital code.

The resulting effect from the amplifier nonlinearity is shown in the Range-Cut (v = 0) map of Fig. 2. The self-interference signal 201 with -30 dB coupling is visible at 0 m and targets 202, 204 are present at 3 m (with RCS = 10 dBsm) and 30 m (with RCS = 0 dBsm). In a practical traffic situation the close target 202 may be a truck and the missed target 204 further away may be a pedestrian. The nonlinear behaviour of the variable gain amplifiers together with strong self-interference creates a noise ridge 203 at zero velocity, making detection of the stationary pedestrian (the missed detection 204 in Figure 2) impossible.

A ghost target 205 is also created due to amplifier nonlinearity, in this case the LNA 110, which has an IIP3 of 5 dBm. These effects lead to misdetection and ghost targets. In the situation described above, with some particular codes (for example LFM codes), the ghost target 205 can be pre-determined based on the range and power of the present targets. The ghost targets result from cross modulation products of the self-interference with strong targets and are generated in the mm-wave front-end at the carrier domain. After down-conversion the cross-modulation products are completely new sequences which result in the ghost targets. An analytical explanation of this effect is described in reference [7].

Due to direct coupling between the transmit and receive antennas 106, 109, a strong self-interference signal 201 (or spill-over) is present at the input of the receiver. The self-interference signal 201 may be substantially stronger than any target signal 202. In the example of Figure 2, the self-interference signal 201 is at a power of around 25-30 dBFS (dB relative to full scale of the ADC), while the strongest target signal 202 at a distance of around 3 m is at a power of around 12 dBFS. A noise ridge 203 at zero relative velocity is present in the received signal at around -11 dBFS, which may mask a missed detection signal 203. A 'ghost' target signal 205 is present at a level of around -7 dBFS, which is created by amplifier nonlinearities due to the presence of the strong self-interference signal 201.

A self-interference signal may also be created when the transmit signal is reflected from an object near the transmitter, such as a car bumper in the case of a typical vehicle radar implementation, and received by the receiver. In the case of MIMO (multiple input multiple output) radar applications, which employ multiple transmitters transmitting orthogonal transmission waveforms, each of the multiple receivers receives a superposition of reflections and coupling signals from multiple transmitters, which further increases the complexity of the self-interference problem.

As a result of the above, self-interference can be a critical limitation for digitally coded radar systems, which can lead to highly demanding requirements for mm-wave and baseband circuits. One solution would be to design linear broadband amplifiers and ADCs with very high dynamic range to suppress the problem. This approach however results in substantial power dissipation penalties and feasibility issues. Reducing the gain of the baseband amplifier to alleviate nonlinearities can translate to more stringent requirements for the ADC. In the above example, using 13 dB of gain instead of 30 dB could allow for eliminating the ridge to below the noise floor. However, this translates to a 17 dB higher dynamic range of the ADC being required, thus 13 effective bits in this case with a 2 GHz bandwidth. Such an ADC would require a power of more than 1.2W, which can be prohibitive for both single and MIMO receivers.

[9] discloses a MIMO radar with a transmit DAC and an ADC in the receive path, applying a digital leakage-cancellation signal via a MIMO filter and a DAC.

### Summary

According to a first aspect there is provided a radar transceiver comprising:
a digital signal generator configured to generate a digital baseband transmission signal;
a transmitter DAC configured to convert the digital baseband transmission signal to an analog baseband transmission signal;
a local oscillator, LO, module configured to generate a carrier signal;
an up-converter configured to mix the carrier signal with the analog baseband transmission signal to generate an RF transmission signal;
an RF amplifier configured to amplify the RF transmission signal;
a transmit antenna configured to transmit the amplified RF transmission signal;
a receive antenna configured to receive an RF signal;
a receive RF amplifier configured to amplify the received RF signal;
a down-converter configured to mix the carrier signal with the amplified received RF signal to provide an analog baseband received signal;
a correction module configured to combine the analog baseband received signal with a digital correction signal to provide a corrected analog baseband signal;
an ADC configured to receive the corrected analog baseband signal and provide a digital baseband signal; and
a correction signal generator configured to generate the digital correction signal based on the digital baseband transmission signal and a digital output signal of the transceiver and provide the correction signal to the correction module,
wherein the correction module comprises a sampling capacitor, a variable cancellation capacitor controllable by the digital correction signal, an amplifier and a switching arrangement configured to sample the baseband received signal and sum a sampled charge across the sampling capacitor with a charge across the variable cancellation capacitor to provide a residue signal to the amplifier, the amplifier configured to amplify the residue signal to provide the corrected analog baseband signal to the ADC.

The radar transceiver may further comprise a clock signal generator configured to provide a clock signal to the switching arrangement and to a sampling switch connected to the sampling capacitor. The clock signal may comprise a first phase in which the sampling switch is closed and a charge transferred to the sampling capacitor and a second phase in which the sampling switch is open and the charge is transferred to an input of the amplifier.

The correction module may comprise:
a first bias switch configured to connect a bias voltage to a summation node during the first clock phase and open during the second phase;
a second bias switch configured to connect the bias voltage to an input node between the sampling capacitor and the sampling switch during the second clock phase and open during the first clock phase.

The correction module may comprise:
an amplifier input switch configured to connect the summation node to an input of the amplifier during the second clock phase;
an amplifier feedback switch configured to connect the input and output of the amplifier during the first clock phase; and
an amplifier feedback capacitor connected between the input and output of the amplifier.

The clock signal may comprise a third phase in which a charge from an output of the amplifier is transferred to the ADC.

The ADC may comprise an ADC sampling switch configured to connect the output of the amplifier to the ADC during the third clock phase.

The ADC may be a successive approximation register ADC.

The radar transceiver may comprise a correlator module configured to correlate the digital baseband signal from the ADC with an output from the digital signal generator to provide the digital output signal.

The radar transceiver may further comprise an FFT processing module configured to process the digital output signal to generate an output range-doppler map.

The radar transceiver may be configured to operate as an FMCW, PMCW or OFDM radar transceiver.

According to a second aspect there is provided a multiple-input multiple-output, MIMO, radar transceiver system comprising a plurality of radar transceivers according to the first aspect.

The LO module and digital signal generator may be common to each of the plurality of radar transceivers.

According to a third aspect there is provided a method of operating the radar transceiver according to the first aspect, the method comprising the steps of:
in a first calibration mode, the correction signal generator monitoring the combined digital output signal and determining signals to be cancelled from the analog baseband signal; and
in a second operation mode, the correction signal generator providing the digital correction signal to the correction module to cancel the signals from the analog baseband signal.

In the first calibration mode a gain of the amplifier may be reduced from a predetermined gain to reduce non-linearity of the amplifier and in the second operation mode the gain of the amplifier may be increased to the predetermined gain.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of an example radar transceiver;
Figure 2 is a plot of received signal power as a function of distance for the example transceiver of Figure 1;
Figure 3 is a schematic diagram of an example radar transceiver with received signal correction;
Figure 4a is schematic diagram of an example module for summation, cancellation, amplification and sampling of a received baseband signal in a conventional radar transceiver;
Figure 4b is a schematic diagram of an example module for summation, cancellation, amplification and sampling of a received baseband signal in an example radar transceiver according to the present disclosure;
Figure 5 is a schematic diagram of an example radar transceiver with an integrated sampler, cancellation and amplification module in the receiver side;
Figure 6 is a schematic diagram of an example correlator module for the transceiver of Figure 5, comprising a bank of multipliers and summation blocks;
Figure 7 is a schematic circuit diagram of an example integrated sampler, cancellation and amplification module with an ADC for the transceiver of Figure 5;
Figure 8 is an example signal timing diagram for the module of Figure 7;
Figure 9 is an example plot of a received digital bitstream over time representing self-interference stemming from an originally transmitted bitstream and the resulting residue bitstream after correction; and
Figure 10 is a schematic diagram of an example MIMO (Multiple-Input, Multiple-Output) transceiver arrangement.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

An approach that reduces the linearity and dynamic range requirements of the receiver is the use of active self-interference cancellation. Such methods are well established in cable Ethernet systems [1] and have received attention in full duplex communication systems [2] and more recently in phase coded radar systems [4,5]. In FMCW radar systems, the impact of self-interference may be reduced or even eliminated with the use of high pass filters, taking advantage of the analog demodulation of the receiver signal that makes frequency selectivity as a function of distance possible (where nearby and strong targets appear at low frequencies, while wanted signals appear at higher frequencies). This is however not possible in digitally coded radar systems in general, in which active cancellation needs to be robust (for example against thickness, material and paint changes in a car bumper), reliable (i.e. needing to work at all times) and to not degrade the noise performance of the receiver chain.

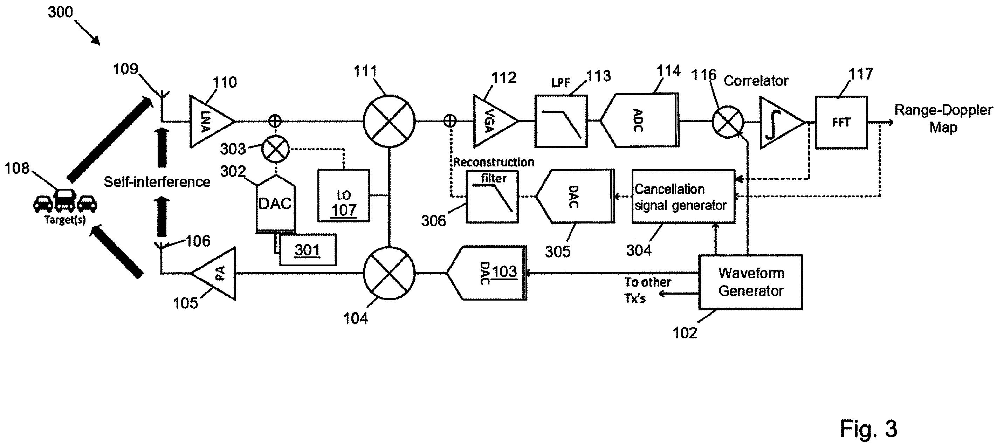

The transceiver 300 illustrated in Figure 3 illustrates two possible approaches for applying active self-interference cancellation, namely cancellation at the carrier and baseband cancellation. The transceiver 300 may in practice comprise in-phase and quadrature paths in the transmitter and receiver paths, as for the transceiver 100 in Figure 1. A single path is illustrated in the example receiver 300 for clarity, but it will be understood that the DAC and upconverter in the transmitter path and the components between the LNA and correlator in the receiver path may comprise both I and Q paths. Corresponding reference signs in Figure 3 to those in Figure 1 can therefore indicate both I and Q paths.

In the first approach, a second digital waveform generator 301, DAC 302 and up-converter 303 is provided to generate a scaled replica of the transmit path, which is combined with the received signal in the mm-wave front-end to cancel a self-interference signal, e.g. in the electromagnetic domain with a coupler, at the output of the modulator 303. The generator 301 combined with DAC 302 and modulator 303 create a cancellation signal, being a scaled replica of the transmit radar signal. The resulting cancellation signal is then applied after the LNA 110 to cancel the self-interference. The remainder of the receiver architecture functions as described above in relation to the example illustrated in Figure 1, with corresponding reference signs. The cancellation signal can in generally be applied before or after the LNA 110. Digital feedback using demodulated radar signals for example before or after range doppler processing may be used to measure and estimate the self-interference signal determining the correct digital waveform for generator 301.

A second approach uses digital feedback to measure and estimate the self-interference in the baseband after the down-conversion mixer 111, relying on the fact that baseband amplifiers suffer significantly more from self-interference since they process amplified signals, compared to the weaker signal level seen at the radar front-end. The received signal is amplified and down-converted as normal in the receiver. After the mixer 111, a scaled replica of the transmitted signal is subtracted through current or voltage summation from the received signal in the analog domain, which is estimated from the digital output by a cancellation signal generator 304, which provides a digital signal to a DAC 305, which outputs an analog signal to the received baseband signal via a reconstruction filter 306, which is then subtracted from the received baseband signal. The remainder of the baseband signal then ideally consists of only wanted target reflections and is then amplified and converted to the digital domain in the ADC 114 before being processed in the digital domain to provide an output range-Doppler map.

To estimate the cancellation signal in the digital feedback path, the gain setting of the variable gain amplifier 112 should be set low for a few chirps to ensure the ADC 114 is not saturated and a proper estimation can be obtained.

Other approaches for active self-interference cancellation are also possible, although the above examples are considered most relevant for radar applications.

Both of the above approaches use a DAC to generate a continuous time signal to cancel in the continuous time domain the self-interference signal embedded in the incoming radar signal. Subtracting a signal in the continuous time domain introduces stringent trade-offs. The cancellation method at the carrier leads to substantial signal loss in the summation node and to more noise added by the cancellation signal, leading to significant reduction in Noise Figure of the receiver. This can be seen for example in reference [8]. Moreover, an additional replica transmitter is required at the mm-wave carrier, adding substantial complexity and area, and consequently cost). Cancellation in the continuous time domain in the baseband on the other hand requires analog circuit summation, which introduces noise and also introduces new constrains with impedances between the mixer 111, DAC 305 and VGA 112, voltage headroom limitations and nonlinearities, all of which compromise performance. Moreover, this approach requires very accurate timing control of the two paths. In the baseband cancellation approach, a DAC 305 with a reconstruction filter 306 is needed. This filter 306 adds group delay to the cancellation signal, resulting in a more difficult time alignment of the cancellation signal with the continuous input signal that depends on process variations, frequencies and temperature.

To overcome the above issues, cancellation may be performed in the baseband in discrete time, which allows for combining sampling and cancellation in one block. In a first phase, the input baseband signal with interference is sampled to move the signal into the discrete-time domain. In a second phase cancellation is performed, and in the third and final phase the discrete time residue is amplified. This process eliminates timing requirements stemming from analog filter group delays and also removes tradeoffs from analog addition of currents or voltages at the output of the mixer. Increased linearity can be achieved because the wanted signal is sampled at a location that is still small, leading to relaxed requirements for the sampling operation.

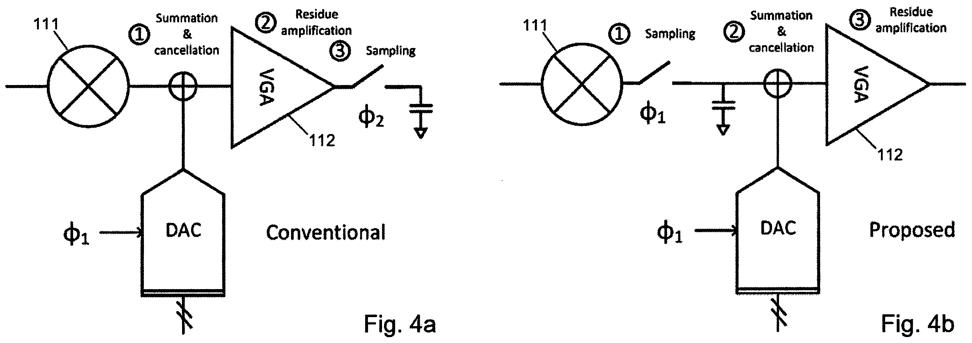

Figure 4a illustrates a conventional approach to summation, cancellation and amplification of a baseband signal for removing self-interference. Figure 4b illustrates an example of a proposed approach where sampling, summation and cancellation are integrated.

In the conventional approach in Figure 4a, summation and cancellation of the self-interference signal are carried out first, followed by amplification of the residue by the VGA 112 and finally sampling and quantization. As described above, this introduces difficulties with, for example, time alignment.

In the proposed approach illustrated in Figure 4b, the sampling step is moved forwards (with or without a buffer at the output of the mixer 111). Since the signals after the mixer 111 are relatively small and may be heavily contaminated with noise, it is possible to sample the input signal linearly despite the presence of the self-interference signal. A second step is to cancel the self-interference signal. The residue signal is then amplified by the VGA 112 and finally digitized with an ADC.

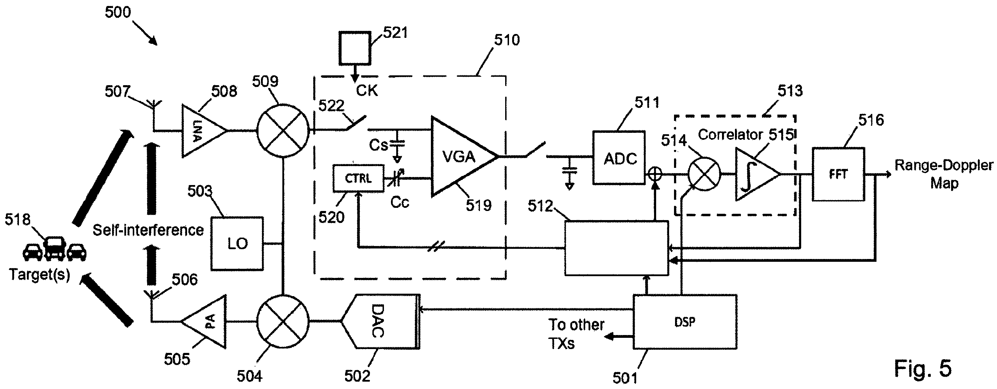

An example schematic block diagram of a complete radar transceiver 500 is illustrated in Figure 5. As with the transceiver illustrated in Figures 1 and 3, the transceiver 500 may comprise both I and Q paths in the receiver and transmitter sides, a single path being illustrated in Figure 5 for clarity. The radar transceiver 500 comprises a digital signal generator 501 configured to generate a digital baseband transmission signal. The digital signal generator 501 may also provide the digital baseband transmission signal to other transceivers in a multi-transceiver implementation. A transmitter DAC 502 converts the digital baseband transmission signal to an analog baseband transmission signal. A local oscillator (LO) module 503 generates a carrier signal, which is mixed with the analog baseband transmission signal at an up-converter 504 that mixes the carrier signal with the analog baseband transmission signal to generate an RF transmission signal. The LO module 503 may be configured to generate a chirped carrier signal, whereas the quadrature mixers and DACs may be configured to operate phase shifters. An RF amplifier 505 amplifies the RF transmission signal, which is transmitted via a transmit antenna 506.

The RF transmission signal is reflected from one or more targets 518, providing a reflected signal that is received by a receiver antenna 507, along with a self-interference signal that is received directly from the transmit antenna 506 and/or reflected from a close static reflector, for example a bumper. The RF signal received by the receive antenna 507 is amplified by an RF amplifier 508. The amplified received RF signal is down-converted by mixing with the carrier signal from the LO 503 at a down-converter 509 to provide an analog baseband received signal.

A correction module 510 receives the analog baseband received signal from the down-converter 509 and combines the analog baseband received signal with a digital correction signal to provide a corrected analog baseband signal. An ADC or quantizer 511 receives the corrected analog baseband signal and converts the signal to a digital baseband signal, which is then processed by a correlator module 513 that combines the digital baseband signal with an output from the digital signal generator 501 to provide a combined digital output signal.

A correction signal generator 512 generates the digital correction signal used by the correction module 510, the digital correction signal being based on the modulated baseband transmission signal and the combined digital output signal, and provides the digital correction signal to the correction module 510.

In the correction module 510, self-interference cancellation takes place after down conversion. A sampling capacitor Cs and sampling switch 522 are used to capture the incoming signal (including the wanted and self-interference signals), moving subsequent signal processing operations into the discrete time domain. Subtraction of the self-interference signal is done using a variable cancellation capacitor Cc, for example using the charge sharing principle. The value of the cancellation capacitor Cc is driven by a control logic switching arrangement 520 that is provided with a pre-calculated digital equivalent of the self-interference signal generated by the correction signal generator 512.

Both the sampling capacitor Cs and the switching arrangement 520 controlling the value of the cancellation capacitor Cc are operated according to a clock signal CK provided by a clock signal generator 521, which provides separate clock signals to the sampling switch 522 and the switching arrangement 520 such that the charge redistribution at Cs and Cc during the cancellation phase occurs at the same time instance.

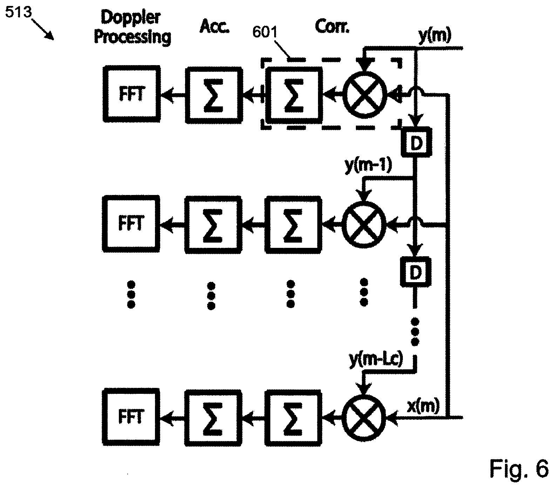

Once subtraction is performed, the residue signal stored on the capacitors Cs, Cc contains the wanted signal and the remainder of the subtraction between self-interference and its quantized equivalent. This residue is amplified by a baseband amplifier 519 and passed to the output of the correction module 510 for further processing. In Figure 5, the output of the correction module is provided to an ADC or quantizer 511 for digitization. The digital baseband signal is then processed similarly to as described above in relation to Figure 1, which involves processing by a correlator module 513, which combines the digital baseband signal with an output from the digital signal generator 501 to provide a combined digital output signal. The correlator module 513 may, in a practical implementation, comprise a bank of multipliers and summation blocks. An example arrangement of such a correlator module 513 comprising a bank of multipliers and summation blocks is illustrated schematically in Figure 6. Each individual combination of a multiplier and summation block 601 receives one digital symbol input from the ADC 511 and one digital symbol input from the analog transmitter. If the ADC output is aligned with the transmit sequence, there is a strong correlation and, based on the number of symbols delayed, the target range can be estimated.

When the transceiver 500 is configured to operate with FMCW MIMO waveforms, e.g. with the LO module 503 generating a chirped carrier signal and the quadrature mixers and DACs being phase shifters or when the DACs synthesize directly FMCW waveforms, the correlator function can be replaced by an FFT.

There are a number of advantages of introducing the sampling operation (but not quantization of the signal) after the down-converter mixer 509 and before receiver analog to digital conversion.

Firstly, cancellation of the self-interference signal is performed in the discrete time domain with sampled data, simplifying the timing requirements between incoming receive and cancellation paths. A reconstruction filter at the DAC in the cancellation path is no longer required since the cancellation signal remains in the discrete time domain. As a result, the impact from the filter group delay and associated timing resolution requirements are eliminated. Additionally the clocks for the sampling and cancellation operations can be shared.

Secondly, three main functions are integrated into one, namely sampling, cancellation and amplification. Moving the sampler forward in the receiver chain is feasible since sampling is a linear operation. Moreover, the sampler processes a small signal, simplifying linearity requirements.

Thirdly, in conventional approaches summation is implemented with resistive or current-based DACs. This introduces voltage headroom, noise and linearity tradeoffs at the summation point relating to the need for the DAC to have high impedance in relation to the mixer output and VGA input. Scaling up the resolution becomes very difficult. With the current approach, the DAC is part of the sampling function which alleviates voltage headroom requirements. The switched capacitor architecture offers instead ease of resolution scaling for the cancellation. The only tradeoff remaining is the thermal noise of the sampler (i.e. kT/C noise).

Fourthly, the ADC 511 following the correction module 510 can have relaxed dynamic range requirements compared to existing implementations, since it operates with smaller signals at the ADC input.

Fifthly, the proposed correction module 510 can remove any (target) signal in the range doppler map, provided it can be detected accurately in the range or range- doppler FFT output. This may for example apply typically to very strong nearby targets such as a constant bumper reflection signal.

Finally, implementing the correction module 510 in the transceiver 500 of Figure 5 with switched capacitors enables integration of the sampling and cancellation operation into one integrated unit. This approach further enables the use of a switched-capacitor feedback amplifier, which provides gain for the wanted signal once the interference signal is removed. This enhances the noise performance of the receiver. The amplifier 519 may be a variable gain amplifier that is tunable according to the mode of operation. Before self-interference cancellation is active, the amplifier 519 may be in a low-gain setting to ensure linear operation and avoid clipping of the subsequent ADC 511. Once the self-interference cancellation is active, the amplifier 519 can be set to a higher gain according to the system requirements.

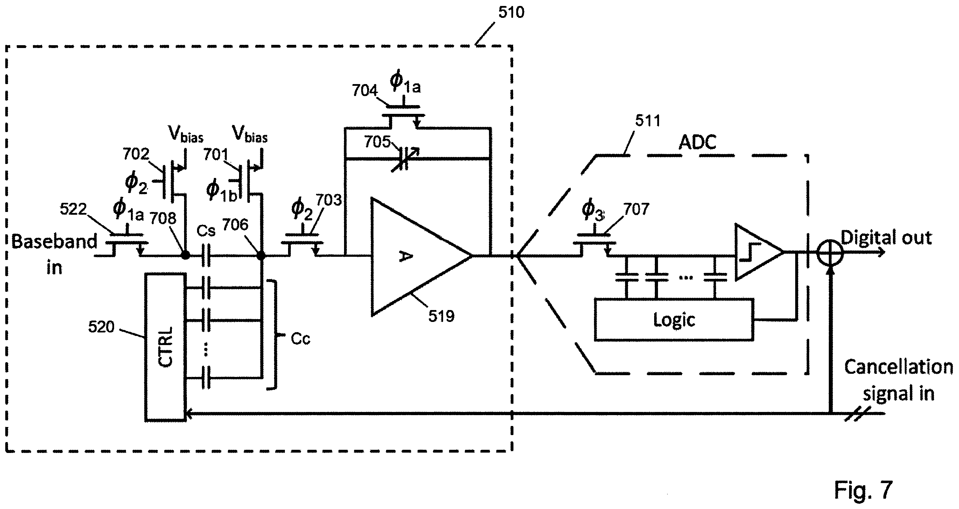

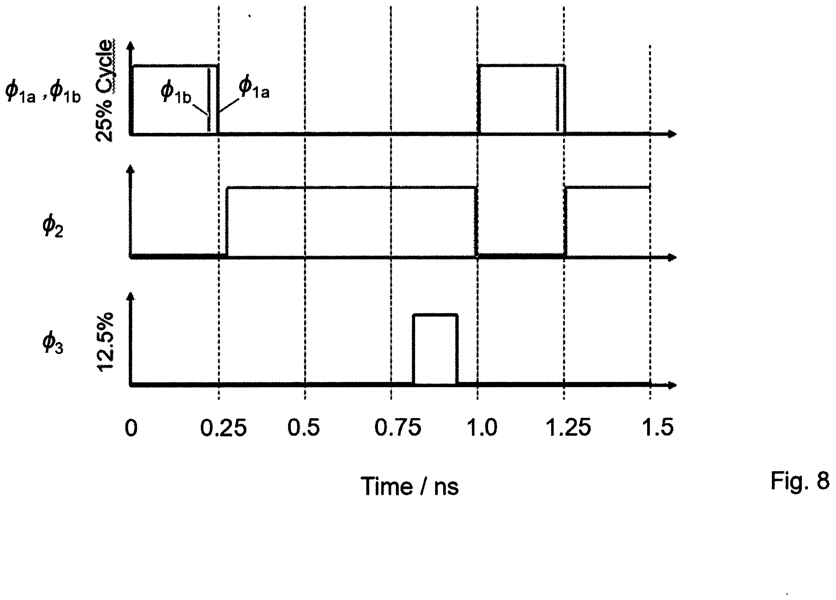

An exemplary schematic implementation of the correction module 510 and ADC 511 is illustrated in Figure 7 and a timing diagram of clock signal phases ϕ₁ₐ, ϕ_{1b}, ϕ₂, ϕ₃ over one clock cycle is illustrated in Figure 8. In a first phase ϕ₁ₐ, ϕ_{1b} of the clock cycle, the sampling switch 522 and a first bias switch 701 are closed, connecting the sampling capacitor Cs between the baseband received signal and a bias voltage V_{bias}. The variable capacitor Cc is also connected between the digital correction signal and the bias voltage V_{bias} during the first clock phase. In the example of Figure 7, the variable capacitor Cc comprises a switchable array of capacitors controlled by the switching arrangement 520, such that a selected subset of the array of capacitors is connected according to the received digital correction signal. A value of the variable capacitor Cc that is connected during the first clock phase is therefore determined by the digital value of the digital correction signal.

In the first phase (ϕ₁ₐ, ϕ_{1b}), the baseband input signal is sampled on the sampling capacitor Cs while one plate of the sampling capacitor Cs is held constant at the bias voltage V_{bias}. At the same time, the input and output of the amplifier 519 are shorted by an amplifier feedback switch 704 to reset the charge on an amplifier feedback capacitor 705. The first bias switch 701 then opens when the first clock phase ends, making a node 706 between the sampling capacitor Cs and an input of the amplifier 519 floating, trapping the charge on the sampling capacitor Cs, following which the sampling switch 522 opens. As shown in Figure 8, the first phase comprises clock signal phases ϕ₁ₐ, ϕ_{1b} having a common rising edge and with a falling edge of phase ϕ₁ₐ occurring after a falling edge of phase ϕ_{1b} such that the sampling switch 522 opens after the first bias switch 701.

In the second phase ϕ₂, which begins after the end of the first phase ϕ₁ (i.e. the first and second phases are non-overlapping), the charge is moved from the sampling capacitor Cs to the feedback capacitor 705 connected across the input and output of the amplifier 519. First, an amplifier input switch 703, which protects the amplifier from the self-interference, is closed to enable the charge to be transferred from the input capacitors Cs, Cc to the feedback capacitor 705 and a second bias switch 702 connects the bias voltage Vbias to an input node 708 between the sampling capacitor Cs and the sampling switch 522. The charge on the sampling capacitor Cs is transferred to the input of the amplifier 519 and simultaneously the charge corresponding to the cancellation signal is provided at the summation node 706. As a result, only the charge of the wanted signals are pushed towards the amplifier 519 and the self-interference is cancelled.

In the third phase ϕ₃, which begins towards the end of, and overlaps with, the second phase ϕ₂, the amplifier 519 is settled and analog to digital conversion is performed by the ADC 511. An ADC sampling switch 607 in the ADC 511 takes the charge from the amplifier 519 and stores it on the DAC of a successive approximation register (SAR) ADC, after which conversion takes place and a digital output signal provided from the ADC 511. The ADC 511 may alternatively be of another type such as a pipeline ADC.

The particular example illustrated in Figure 7 uses a separate sampling capacitor Cs and switched capacitor DAC. In alternative implementations these two functions may be integrated into one capacitor, i.e. it is possible to sample on top of the DAC capacitance Cc, requiring fewer capacitors with more switches. With respect to timing, this means that the resetting of the DAC capacitance Cc needs to be done before sampling, whereas in the illustrated implementation the resetting of the DAC can be done during the sampling.

The proposed architecture in Figure 7 introduces a transition of baseband processing after the mixer 509 from continuous time to discrete time but does not perform quantization of the wanted radar signal. As such, the resolution requirements of the correction module 510 are only related to the level of accuracy with which the interference signal needs to be suppressed but not the requirements of the signal to be detected. These remain a property of the ADC or quantizer 511 that follows the correction module 510 or cancellation circuit. Moreover, the digital representation of the interference signal is added back to the signal at the output of the ADC 511 in the digital domain, thus re-stating the interference signal at its original level and cancelling the residue quantization artefacts that typically cover the whole range doppler map. In the subsequent ADC function there are no timing accuracy requirements other than performing re-sampling (the sampler in the cancelling stage becomes the speed/timing critical stage of the receiver), whereas the inherent gain function of the cancellation relaxes the dynamic range and quantization requirements of the main ADC function as in a conventional receiver. In practice, the cancellation capacitors may deviate in a silicon implementation from their ideal values. This may introduce a second order error when the digital representation of the cancellation signal is added back in the digital domain. This error can be eliminated by estimating or measuring the actual capacitor values and using these estimates when adding the digital representation of the cancellation signal.

The radar transceiver 500 operates in two modes. In a first calibration mode, the correction signal generator 512 monitors the output from the receiver side and determines signals to be cancelled, which may be a self-interference signal together with other ghost or reflection signals that need to be removed from the raw baseband signal. In a second operation mode, the correction signal generator 512 provides a cancellation signal to the correction module 510 to remove the signals.

In the first calibration mode, the noise ridge from baseband nonlinearity, which may stem from antenna leakage or bumper reflections that remain static during radar operation can be cancelled out. During this mode a few training chirp sequences may be transmitted. These chirp sequences are received and amplified linearly using a low gain setting of the VGA 519. In this way, after processing the interference power residing in typically the first couple of range bins can be captured and estimated. After a few chirp sequences, a digital estimate of the signal at these bins is provided to the correction module 510. The gain of the VGA 519 can then be slowly incremented towards the required gain setting while iteratively measuring the self-interference at the correlator output and feeding back that to the correction module 510.

In the second mode of operation, which is during normal radar operation, the correction signal generator can be operated to cancel targets in arbitrary range bins that may be generated dynamically during radar observations. While antenna leakage and bumper reflections will tend to create self-interference that can always be cancelled at the baseband, as described above, other signals remain present in the LNA and mixer circuits.

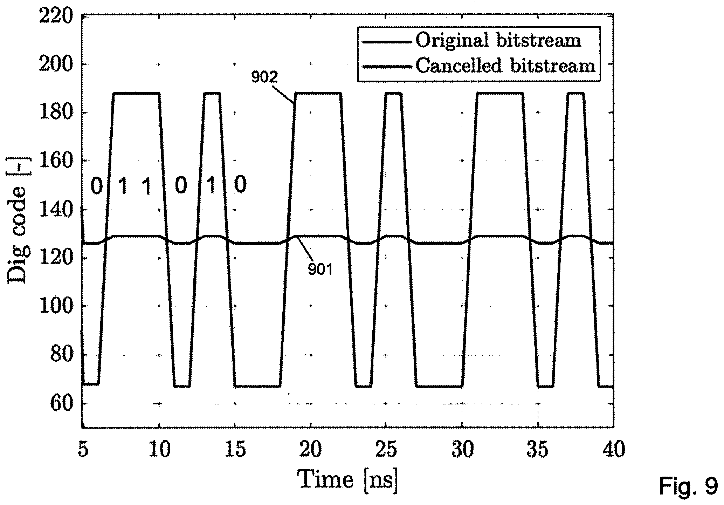

Figure 9 illustrates simulation results of the transceiver 500 with the correction module 510 of Figure 7 using a short bit stream input. An input bitstream is filtered using a second order low-pass filter. The same bit stream is applied to the cancellation DAC. Figure 9 shows a time domain plot of schematic simulations providing a bitstream input signal, showing a comparison between the original bitstream 901 and the cancelled bitstream 902, illustrating the difference in swing at the output of the quantizer when cancellation is not applied and when it is applied. The ADC output is reduced 4 LSBs because of the DAC resolution and the gain applied afterwards.

In summary, the present disclosure proposes a mixed signal cancellation circuit that operates in discrete time domain and is able to remove self-interference in a digitally modulated radar transceiver with substantially better performance and flexibility compared to existing known implementations. The transceiver is able to cancel within the baseband the impact of cross-modulation / nonlinearities of the mm-wave front-end amplifier without the penalties of RF cancellation in existing implementations.

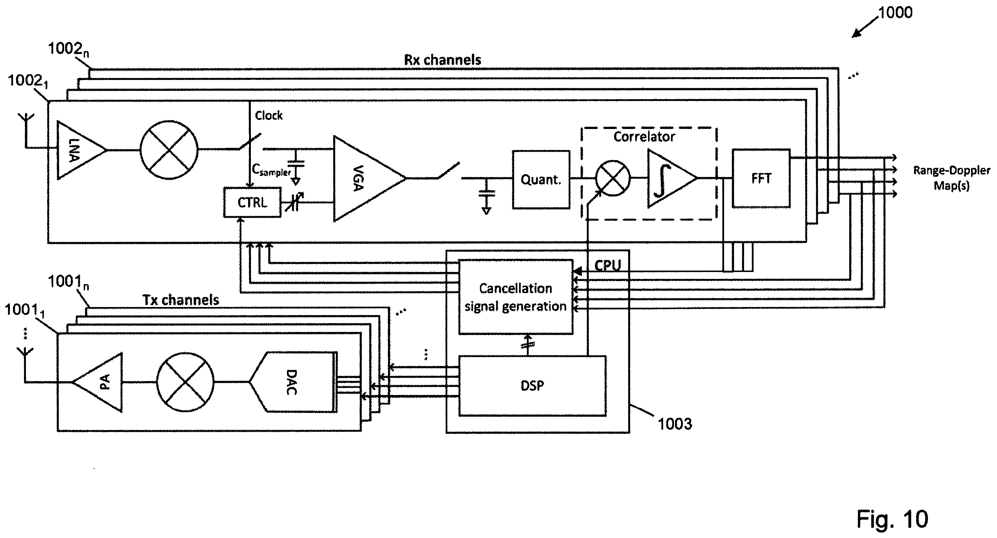

Implementation of the transceiver may be within a MIMO radar system, i.e. in which multiple transceivers are present. Each transceiver may operate as an FMCW, PMCW or OFDM radar transceiver. An example arrangement for a MIMO radar system is illustrated in Figure 10, in which multiple transceivers of the type illustrated in Figure 5 are combined. The MIMO radar system 1000 comprises a plurality of transmitter channel modules 1001₁₋ₙ and a corresponding plurality of receiver channel modules 1002₁₋ₙ. A common processor (CPU) 1003 receives range-Doppler map outputs from the receivers 1001₁₋ₙ and provides transmission signals to the transmitters 1001₁₋ₙ and cancellation signals to the correction module in each of the receivers 1002₁₋ₙ.

Each of the plurality of receivers 1002₁₋ₙ employs the self-interference cancellation loop as described above in relation to Figure 7. Each receiver receives multiple self-interference reflections from all available transmit antennas, as a result of which multiple received chirps need to be cancelled. The information needed for this is taken from all the receivers from their corresponding range-Doppler processing in order to obtain the phase and amplitude information belonging to each sequence. This information is used in the CPU 1003 to process each corresponding sequence and estimate a cancellation signal for all reflections. Then the CPU 1003 feeds back the cancellation signal for each corresponding receiver 1002₁₋ₙ based on each measured transmit sequence phase and amplitude.

As for the other transceiver examples, the received and transmitter paths in the MIMO transceiver 1000 may comprise both in-phase and quadrature paths, a single path in each case being illustrated in Figure 10 for clarity.

### References

[1] Jie Chen, Yongru Gu and K. K. Parhi, "MIMO Equalization and Cancellation for 10Gbase-T1," 2006 IEEE International Conference on Acoustics Speech and Signal Processing Proceedings, Toulouse, 2006, pp. IV-IV, doi: 10.1109/ICASSP.2006.1661049.
[2] C. Wang, W. Li, F. Chen, W. Zuo, Y. Pu and H. Xu, "A 0.5-4GHz Full-Duplex Receiver with Multi-Domain Self-Interference Cancellation Using Capacitor Stacking Based Second-Order Delay Cells in RF Canceller," 2022 IEEE Radio Frequency Integrated Circuits Symposium (RFIC), Denver, CO, USA, 2022, pp. 259-262, doi: 10.1109/RFIC54546.2022.9863120.
[3] EP3499731A1 (NXP USA, Inc.): Interference cancellation of expected interference signal.
[4] US9791551B1 (UHNDER, Inc.): Vehicular radar system with self-interference cancellation.
[5] EP3588127A1 (IMEC VZW): Spillover cancellation in radar systems.
[6] M. Bauduin and A. Bourdoux, "Mixed-Signal Transmitter Leakage Cancellation for PMCW MIMO Radar," 2018 15th European Radar Conference (EuRAD), Madrid, Spain, 2018, pp. 293-296, doi: 10.23919/EuRAD.2018.8546652.
[7] D. Rosenmuller, B. van de Ven, K. Doris, G. Radulov, M. Matters and E. Janssen, "The Impact of Transceiver Nonlinearity in PMCW Radar using Polyphase Coded Sequences," 2023 EuRAD, doi: 10.23919/EuRAD58043.2023.10289389.
[8] V. Giannini et al., "9.2 A 192-Virtual-Receiver 77/79GHz GMSK Code-Domain MIMO Radar System-on-Chip," 2019 IEEE International Solid- State Circuits Conference - (ISSCC), San Francisco, CA, USA, 2019, pp. 164-166, doi: 10.1109/ISSCC.2019.8662386.
[9] US 2020/132805 A1 (LEHNE MARK A ET AL) : APPARATUS, SYSTEM AND METHOD OF LEAKAGE CANCELLATION FOR MULTIPLE INPUT MULTIPLE OUTPUT (MIMO) RADAR.

## Claims

1. A radar transceiver (500) comprising:
a digital signal generator (501) configured to generate a digital baseband transmission signal;
a transmitter DAC (502) configured to convert the digital baseband transmission signal to an analog baseband transmission signal;
a local oscillator, LO, module (503) configured to generate a carrier signal;
an up-converter (504) configured to mix the carrier signal with the analog baseband transmission signal to generate an RF transmission signal;
an RF amplifier (505) configured to amplify the RF transmission signal;
a transmit antenna (506) configured to transmit the amplified RF transmission signal;
a receive antenna (507) configured to receive an RF signal;
a receive RF amplifier (508) configured to amplify the received RF signal;
a down-converter (509) configured to mix the carrier signal with the amplified received RF signal to provide an analog baseband received signal;
a correction module (510) configured to combine the analog baseband received signal with a digital correction signal to provide a corrected analog baseband signal;
an ADC (511) configured to receive the corrected analog baseband signal and provide a digital baseband signal; and
a correction signal generator (512) configured to generate the digital correction signal based on the digital baseband transmission signal and a digital output signal of the transceiver (500) and provide the correction signal to the correction module (510),
wherein the correction module (510) comprises a sampling capacitor (Cs), a variable cancellation capacitor (Cc) controllable by the digital correction signal, an amplifier (519) and a switching arrangement (520) configured to sample the baseband received signal and sum a sampled charge across the sampling capacitor (Cs) with a charge across the variable cancellation capacitor (Cc) to provide a residue signal to the amplifier (519), the amplifier (519) configured to amplify the residue signal to provide the corrected analog baseband signal to the ADC (511).

2. The radar transceiver (500) of claim 1, further comprising a clock signal generator (521) configured to provide a clock signal (CK) to the switching arrangement (520) and to a sampling switch (522) connected to the sampling capacitor (Cs).

3. The radar transceiver (500) of claim 2, wherein the clock signal (CK) comprises a first phase (φ₁) in which the sampling switch (522) is closed and a charge transferred to the sampling capacitor (Cs) and a second phase (ϕ₂) in which the sampling switch (522) is open and the charge is transferred to an input of the amplifier (519).

4. The radar transceiver (500) of claim 3, wherein the correction module (510) comprises:
a first bias switch (701) configured to connect a bias voltage (Vbias) to a summation node (706) during the first clock phase (φ₁) and open during the second phase (ϕ₂);
a second bias switch (702) configured to connect the bias voltage (Vbias) to an input node (708) between the sampling capacitor (Cs) and the sampling switch (522) during the second clock phase (ϕ₂) and open during the first clock phase (ϕ₁).

5. The radar transceiver (500) of claim 4, wherein the correction module (510) comprises:
an amplifier input switch (703) configured to connect the summation node (706) to an input of the amplifier (519) during the second clock phase (ϕ₂);
an amplifier feedback switch (704) configured to connect the input and output of the amplifier (519) during the first clock phase (ϕ₁); and
an amplifier feedback capacitor (705) connected between the input and output of the amplifier (519).

6. The radar transceiver (500) of any one of claims 3 to 5, wherein the clock signal (CK) comprises a third phase (ϕ₃) in which a charge from an output of the amplifier (519) is transferred to the ADC (511).

7. The radar transceiver (500) of claim 6, wherein the ADC (511) comprises an ADC sampling switch (607) configured to connect the output of the amplifier (519) to the ADC during the third clock phase (ϕ₃).

8. The radar transceiver (500) of claim 6 or claim 7, wherein the ADC is a successive approximation register ADC.

9. The radar transceiver (500) of any preceding claim, comprising a correlator module (513) configured to correlate the digital baseband signal from the ADC (511) with an output from the digital signal generator (501) to provide the digital output signal.

10. The radar transceiver (500) of claim 9, comprising an FFT processing module (516) configured to process the digital output signal to generate an output range-doppler map.

11. The radar transceiver (500) of any preceding claim, wherein the radar transceiver is configured to operate as an FMCW, PMCW or OFDM radar transceiver.

12. A multiple-input multiple-output, MIMO, radar transceiver system (1100) comprising a plurality of radar transceivers (500) according to any preceding claim.

13. The MIMO radar transceiver system according to claim 12, wherein the LO module (503) and digital signal generator (501) are common to each of the plurality of radar transceivers (500).

14. A method of operating the radar transceiver according to any one of claims 1 to 11, the method comprising the steps of:
in a first calibration mode, the correction signal generator (512) monitoring the combined digital output signal and determining signals to be cancelled from the analog baseband signal; and
in a second operation mode, the correction signal generator (512) providing the digital correction signal to the correction module (510) to cancel the signals from the analog baseband signal.

15. The method of claim 14 wherein, in the first calibration mode a gain of the amplifier (519) is reduced from a predetermined gain to reduce non-linearity of the amplifier (519) and in the second operation mode the gain of the amplifier (519) is increased to the predetermined gain.

## Patentansprüche

1. Radar-Sendeempfänger (500), der Folgendes umfasst:
einen digitalen Signalgenerator (501), der dazu ausgelegt ist, ein digitales Basisbandübertragungssignal zu erzeugen;
einen Sender-DAC (502), der dazu ausgelegt ist, das digitale Basisbandübertragungssignal in ein analoges Basisbandübertragungssignal umzuwandeln;
ein Lokaloszillator-Modul, LO-Modul (503), das dazu ausgelegt ist, ein Trägersignal zu erzeugen;
einen Aufwärtswandler (504), der dazu ausgelegt ist, das Trägersignal mit dem analogen Basisbandübertragungssignal zu mischen, um ein HF-Übertragungssignal zu erzeugen;
einen HF-Verstärker (505), der dazu ausgelegt ist, das HF-Übertragungssignal zu verstärken;
eine Sendeantenne (506), die dazu ausgelegt ist, das verstärkte HF-Übertragungssignal zu senden;
eine Empfangsantenne (507), die dazu ausgelegt ist, ein HF-Signal zu empfangen;
einen Empfangs-HF-Verstärker (508), der dazu ausgelegt ist, das empfangene HF-Signal zu verstärken;
einen Abwärtswandler (509), der dazu ausgelegt ist, das Trägersignal mit dem verstärkten empfangenen HF-Signal zu mischen, um ein analoges Basisband-Empfangssignal bereitzustellen;
ein Korrekturmodul (510), das dazu ausgelegt ist, das empfangene analoge Basisbandsignal mit einem digitalen Korrektursignal zu kombinieren, um ein korrigiertes analoges Basisbandsignal bereitzustellen;
einen ADC (511), der dazu ausgelegt ist, das korrigierte analoge Basisbandsignal zu empfangen und ein digitales Basisbandsignal bereitzustellen; und
einen Korrektursignalgenerator (512), der dazu ausgelegt ist, das digitale Korrektursignal basierend auf dem digitalen Basisbandübertragungssignal und einem digitalen Ausgangssignal des Sendeempfängers (500) zu erzeugen und das Korrektursignal an das Korrekturmodul (510) bereitzustellen,
wobei das Korrekturmodul (510) einen Abtastkondensator (Cs), einen variablen Löschkondensator (Cc), der durch das digitale Korrektursignal steuerbar ist, einen Verstärker (519) und eine Schaltanordnung (520) umfasst, die dazu ausgelegt ist, das empfangene Basisbandsignal abzutasten und eine abgetastete Ladung über den Abtastkondensator (Cs) mit einer Ladung über den variablen Löschkondensator (Cc) zu summieren, um dem Verstärker (519) ein Restsignal bereitzustellen, wobei der Verstärker (519) dazu ausgelegt ist, das Restsignal zu verstärken, um das korrigierte analoge Basisbandsignal an den ADC (511) bereitzustellen.

2. Radar-Sendeempfänger (500) nach Anspruch 1, der ferner einen Taktsignalgenerator (521) umfasst, der dazu ausgelegt ist, ein Taktsignal (CK) an die Schaltanordnung (520) und an einen Abtastschalter (522), der mit dem Abtastkondensator (Cs) verbunden ist, bereitzustellen.

3. Radar-Sendeempfänger (500) nach Anspruch 2, wobei das Taktsignal (CK) eine erste Phase (ϕ₁), in der der Abtastschalter (522) geschlossen ist, und eine Ladung, die an den Abtastkondensator (Cs) übertragen wird, und eine zweite Phase (φ₂), in der der Abtastschalter (522) geöffnet ist, umfasst und die Ladung an einen Eingang des Verstärkers (519) übertragen wird.

4. Radar-Sendeempfänger (500) nach Anspruch 3, wobei das Korrekturmodul (510) Folgendes umfasst:
einen ersten Vorspannungsschalter (701), der dazu ausgelegt ist, eine Vorspannung (Vbias) während der ersten Taktphase (φ₁) mit einem Summationsknoten (706) zu verbinden und während der zweiten Phase (φ₂) zu öffnen;
einen zweiten Vorspannungsschalter (702), der dazu ausgelegt ist, die Vorspannung (Vbias) mit einem Eingangsknoten (708) zwischen dem Abtastkondensator (Cs) und dem Abtastschalter (522) während der zweiten Taktphase (φ₂) zu verbinden und während der ersten Taktphase (φ₁) zu öffnen.

5. Radar-Sendeempfänger (500) nach Anspruch 4, wobei das Korrekturmodul (510) Folgendes umfasst:
einen Verstärkereingangsschalter (703), der dazu ausgelegt ist, den Summationsknoten (706) während der zweiten Taktphase (φ₂) mit einem Eingang des Verstärkers (519) zu verbinden;
einen Verstärkerrückkopplungsschalter (704), der dazu ausgelegt ist, den Eingang und den Ausgang des Verstärkers (519) während der ersten Taktphase (φ₁) zu verbinden; und
einen Verstärkerrückkopplungskondensator (705), der zwischen den Eingang und den Ausgang des Verstärkers (519) geschaltet ist.

6. Radar-Sendeempfänger (500) nach einem der Ansprüche 3 bis 5, wobei das Taktsignal (CK) eine dritte Phase (φ₃) umfasst, in der eine Ladung von einem Ausgang des Verstärkers (519) zu dem ADC (511) übertragen wird.

7. Radar-Sendeempfänger (500) nach Anspruch 6, wobei der ADC (511) einen ADC-Abtastschalter (607) umfasst, der dazu ausgelegt ist, den Ausgang des Verstärkers (519) während der dritten Taktphase (φ₃) mit dem ADC zu verbinden.

8. Radar-Sendeempfänger (500) nach Anspruch 6 oder Anspruch 7, wobei der ADC ein sukzessiver Approximationsregister-ADC ist.

9. Radar-Sendeempfänger (500) nach einem der vorhergehenden Ansprüche, der ein Korrelatormodul (513) umfasst, das dazu ausgelegt ist, das digitale Basisbandsignal von dem ADC (511) mit einem Ausgang von dem digitalen Signalgenerator (501) zu korrelieren, um das digitale Ausgangssignal bereitzustellen.

10. Radar-Sendeempfänger (500) nach Anspruch 9, der ein FFT-Verarbeitungsmodul (516) umfasst, das dazu ausgelegt ist, das digitale Ausgangssignal zu verarbeiten, um eine Ausgangsbereich-Doppler-Karte zu erzeugen.

11. Radar-Sendeempfänger (500) nach einem der vorhergehenden Ansprüche, wobei der Radar-Sendeempfänger dazu ausgelegt ist, als ein FMCW-, PMCW- oder OFDM-Radar-Sendeempfänger zu arbeiten.

12. MIMO-Radar-Sendeempfängersystem (1100) mit mehreren Eingängen und mehreren Ausgängen, das mehrere Radar-Sendeempfänger (500) nach einem der vorhergehenden Ansprüche umfasst.

13. MIMO-Radar-Sendeempfängersystem nach Anspruch 12, wobei das LO-Modul (503) und der digitale Signalgenerator (501) jedem der mehreren Radar-Sendeempfänger (500) gemeinsam sind.

14. Verfahren zum Betreiben eines Radar-Sendeempfängers nach einem der Ansprüche 1 bis 11, wobei das Verfahren die folgenden Schritte umfasst:
in einem ersten Kalibrierungsmodus überwacht der Korrektursignalgenerator (512) das kombinierte digitale Ausgangssignal und bestimmt Signale, die aus dem analogen Basisbandsignal zu löschen sind; und
in einem zweiten Betriebsmodus liefert der Korrektursignalgenerator (512) das digitale Korrektursignal an das Korrekturmodul (510), um die Signale aus dem analogen Basisbandsignal zu löschen.

15. Verfahren nach Anspruch 14, wobei in dem ersten Kalibrierungsmodus eine Verstärkung des Verstärkers (519) von einer vorbestimmten Verstärkung reduziert wird, um die Nichtlinearität des Verstärkers (519) zu reduzieren, und in dem zweiten Betriebsmodus die Verstärkung des Verstärkers (519) auf die vorbestimmte Verstärkung erhöht wird.

## Revendications

1. Émetteur-récepteur radar (500) comprenant :
un générateur de signal numérique (501) configuré pour générer un signal numérique de transmission en bande de base ;
un convertisseur numérique-analogique, DAC, d'émetteur (502) configuré pour convertir le signal numérique de transmission en bande de base en un signal analogique de transmission en bande de base ;
un module d'oscillateur local, LO, (503) configuré pour générer un signal de porteuse ;
un convertisseur élévateur de fréquence (504) configuré pour mélanger le signal de porteuse avec le signal analogique de transmission en bande de base afin de générer un signal de transmission RF ;
un amplificateur RF (505) configuré pour amplifier le signal de transmission RF ;
une antenne d'émission (506) configurée pour émettre le signal de transmission RF amplifié ;
une antenne de réception (507) configurée pour recevoir un signal RF ;
un amplificateur RF de réception (508) configuré pour amplifier le signal RF reçu ;
un convertisseur abaisseur de fréquence (509) configuré pour mélanger le signal de porteuse avec le signal RF reçu amplifié afin de fournir un signal analogique reçu en bande de base ;
un module de correction (510) configuré pour combiner le signal analogique reçu en bande de base avec un signal numérique de correction afin de fournir un signal analogique corrigé en bande de base ;
un convertisseur analogique-numérique, ADC, (511) configuré pour recevoir le signal analogique corrigé en bande de base et fournir un signal numérique en bande de base ; et
un générateur de signal de correction (512) configuré pour générer le signal numérique de correction sur la base du signal numérique de transmission en bande de base et d'un signal numérique de sortie de l'émetteur-récepteur (500) et fournir le signal de correction au module de correction (510),
dans lequel le module de correction (510) comprend un condensateur d'échantillonnage (Cs), un condensateur variable d'annulation (Cc) pouvant être commandé par le signal numérique de correction, un amplificateur (519) et un montage de commutation (520) configuré pour échantillonner le signal reçu en bande de base et sommer une charge échantillonnée aux bornes du condensateur d'échantillonnage (Cs) avec une charge aux bornes du condensateur variable d'annulation (Cc) afin de fournir un signal résiduel à l'amplificateur (519), l'amplificateur (519) étant configuré pour amplifier le signal résiduel afin de fournir le signal analogique corrigé en bande de base à l'ADC (511).

2. Émetteur-récepteur radar (500) selon la revendication 1, comprenant en outre un générateur de signal d'horloge (521) configuré pour fournir un signal d'horloge (CK) au montage de commutation (520) et à un commutateur d'échantillonnage (522) connecté au condensateur d'échantillonnage (Cs).

3. Émetteur-récepteur radar (500) selon la revendication 2, dans lequel le signal d'horloge (CK) comprend une première phase (ϕ₁), dans laquelle le commutateur d'échantillonnage (522) est fermé et une charge est transférée au condensateur d'échantillonnage (Cs), et une deuxième phase (ϕ₂), dans laquelle le commutateur d'échantillonnage (522) est ouvert et la charge est transférée à une entrée de l'amplificateur (519).

4. Émetteur-récepteur radar (500) selon la revendication 3, dans lequel le module de correction (510) comprend :
un premier commutateur de polarisation (701) configuré pour connecter une tension de polarisation (Vbias) à un nœud de sommation (706) pendant la première phase d'horloge (ϕ₁) et pour s'ouvrir pendant la deuxième phase (ϕ₂) ;
un deuxième commutateur de polarisation (702) configuré pour connecter la tension de polarisation (Vbias) à un nœud d'entrée (708) entre le condensateur d'échantillonnage (Cs) et le commutateur d'échantillonnage (522) pendant la deuxième phase d'horloge (ϕ₂) et pour s'ouvrir pendant la première phase d'horloge (ϕ₁).

5. Émetteur-récepteur radar (500) selon la revendication 4, dans lequel le module de correction (510) comprend :
un commutateur d'entrée d'amplificateur (703) configuré pour connecter le nœud de sommation (706) à une entrée de l'amplificateur (519) pendant la deuxième phase d'horloge (ϕ₂) ;
un commutateur de rétroaction d'amplificateur (704) configuré pour connecter l'entrée et la sortie de l'amplificateur (519) pendant la première phase d'horloge (ϕ₁) ; et
un condensateur de rétroaction d'amplificateur (705) connecté entre l'entrée et la sortie de l'amplificateur (519).

6. Émetteur-récepteur radar (500) selon l'une quelconque des revendications 3 à 5, dans lequel le signal d'horloge (CK) comprend une troisième phase (ϕ₃), dans laquelle une charge provenant d'une sortie de l'amplificateur (519) est transférée à l'ADC (511).

7. Émetteur-récepteur radar (500) selon la revendication 6, dans lequel l'ADC (511) comprend un commutateur d'échantillonnage d'ADC (607) configuré pour connecter la sortie de l'amplificateur (519) à l'ADC pendant la troisième phase d'horloge (ϕ₃).

8. Émetteur-récepteur radar (500) selon la revendication 6 ou la revendication 7, dans lequel l'ADC est un ADC à registre d'approximations successives.

9. Émetteur-récepteur radar (500) selon l'une quelconque des revendications précédentes, comprenant un module corrélateur (513) configuré pour corréler le signal numérique en bande de base provenant de l'ADC (511) avec une sortie provenant du générateur de signal numérique (501) afin de fournir le signal numérique de sortie.

10. Émetteur-récepteur radar (500) selon la revendication 9, comprenant un module de traitement FFT (516) configuré pour traiter le signal numérique de sortie afin de générer une carte distance-Doppler de sortie.

11. Émetteur-récepteur radar (500) selon l'une quelconque des revendications précédentes, l'émetteur-récepteur radar étant configuré pour fonctionner comme un émetteur-récepteur radar FMCW, PMCW ou OFDM.

12. Système d'émetteurs-récepteurs radar à entrées multiples et à sorties multiples, MIMO, (1100) comprenant une pluralité d'émetteurs-récepteurs radar (500) selon l'une quelconque des revendications précédentes.

13. Système d'émetteurs-récepteurs radar MIMO selon la revendication 12, dans lequel le module LO (503) et le générateur de signal numérique (501) sont communs à chacun de la pluralité d'émetteurs-récepteurs radar (500).

14. Procédé de fonctionnement de l'émetteur-récepteur radar selon l'une quelconque des revendications 1 à 11, le procédé comprenant les étapes suivantes :
dans un premier mode d'étalonnage, par le générateur de signal de correction (512), surveillance du signal numérique de sortie combiné et détermination des signaux à annuler dans le signal analogique en bande de base ; et
dans un deuxième mode de fonctionnement, fourniture, par le générateur de signal de correction (512), du signal numérique de correction au module de correction (510) afin d'annuler les signaux dans le signal analogique en bande de base.

15. Procédé selon la revendication 14, dans lequel, dans le premier mode d'étalonnage, un gain de l'amplificateur (519) est réduit par rapport à un gain prédéterminé afin de réduire la non-linéarité de l'amplificateur (519) et, dans le deuxième mode de fonctionnement, le gain de l'amplificateur (519) est augmenté jusqu'au gain prédéterminé.
